# FASCICULE DE BREVET EUROPEEN

(11) **EP 3 675 542 B1**
(45) Date de publication et mention de la délivrance du brevet: **23.02.2022**
(21) Numéro de dépôt: 19220132.5
(22) Date de dépôt: 30.12.2019
(51) Int. Cl.: H04W 12/06, H04W 12/033, H04W 76/14, H04W 4/90, H04W 4/44, H04W 88/18, H04W 88/12, H04W 92/12, H04W 88/10, H04W 12/45, H04W 12/72, H04W 4/00, H04W 4/70, H04W 4/80

(54) **DISPOSITIF ET PROCÉDÉ DE GESTION DE L'AUTHENTIFICATION MUTUELLE POUR LA COMMUNICATION DIRECTE ENTRE DES STRUCTURES MOBILES D'UN SYSTÈME DE RADIOCOMMUNICATION MOBILE**
STEUERUNGSVORRICHTUNG UND -VERFAHREN DER GEGENSEITIGEN AUTHENTIFIZIERUNG FÜR DIE DIREKTE KOMMUNIKATION ZWISCHEN MOBILEN STRUKTUREN EINES MOBILFUNKSYSTEMS
DEVICE AND METHOD FOR MANAGING MUTUAL AUTHENTICATION FOR DIRECT COMMUNICATION BETWEEN MOBILE STRUCTURES OF A MOBILE RADIO COMMUNICATION SYSTEM

(30) Priorité: 31.12.2018 EP 18306903; 02.04.2019 FR 1903520
(43) Date de publication de la demande: 01.07.2020
(73) Titulaire: BULL SAS, 78340 Les Clayes sous Bois (FR)
(72) Inventeur: PISON, Laurent, 78760 Jouars Pontchartrain (FR); DUBOIS, François, 60730 Cauvigny (FR)
(74) Mandataire: IPAZ

(56) Documents cités:
- WO-A1-2016/178554
- US-A1- 2018 020 442
- "3rd Generation Partnership Project; Technical Specification Group Services and System Aspects; Proximity-based services (ProSe); Stage 2 (Release 15)", 3GPP DRAFT; 23303-F10_CR_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 18 juin 2018 (2018-06-18), XP051535215, Extrait de l'Internet: URL:http://www.3gpp.org/ftp/tsg%5Fsa/WG2%5 FArch/Latest%5FSA2%5FSpecs/DRAFT%5FINTERIM /Archive/23303%2Df10%5FCR%5FImplemented%2E zip [extrait le 2018-06-18]

## Description

La présente invention concerne de manière générale les systèmes de radiocommunications avec les mobiles. En particulier, elle concerne un système supportant la communication directe entre des structures mobiles d'un tel réseau.

### [Art antérieur]

Les réseaux de télécommunication avec les mobiles, comme les réseaux cellulaires définie par le consortium 3GPP, tels que les réseaux selon les normes, GSM, UMTS, LTE (« *Long Term Evolution* ») et son évolution LTE-A (« Advanced LTE »), permettent d'établir des communications à haut débit entre des terminaux mobiles. L'architecture de ces réseaux repose généralement sur un ensemble de stations de base, appelées eNodeB (de l'anglais « *evolved Node B* ») dans la norme LTE, qui sont des nœuds de réseau fixes formant la partie radio du réseau, appelée eUTRAN dans la norme LTE, et qui établissent des communications sans fil avec des terminaux mobiles, appelés UEs (de l'anglais « *User Equipements* ») dans la norme LTE, via une interface radio spécifique, appelée interface Uu dans la norme LTE. La partie radio d'un réseau LTE se compose des eNodeB, d'antennes locales ou distantes, de liaisons en fibres optiques vers les antennes distantes (liens CPRI) et des liaisons IP (« Internet Protocol ») reliant les eNodeB entre eux (interface X2) et avec le cœur de réseau (interface S1) via un réseau de backhaul.

Les normes associées aux réseaux cellulaires et notamment la norme LTE sont compatibles avec le concept de cellule mobile, suivant lequel une station de base peut elle-même être mobile, comme étant installée dans une structure mobile (par exemple un véhicule de pompiers, un véhicule de type « command-car » des forces de sécurité ou encore une antenne déplaçable), afin de pouvoir projeter en tout lieu d'un territoire une cellule capable de servir un groupe de terminaux mobiles utilisés par les agents des forces de police, des pompiers, etc.

Les échanges inter-stations de base qui ont lieu au sein du réseau doivent nécessairement passer par le cœur du réseau, appelé EPC (de l'anglais « *Evolved Packet Core* ») dans la norme LTE. Autrement dit, les stations de base du réseau ne peuvent pas communiquer directement entre elles, mais uniquement par l'intermédiaire du cœur du réseau.

Dans certains cas, toutefois, il peut être souhaitable d'établir une liaison de communication entre deux équipements donnés du réseau sans passer par le réseau de backhaul standard et le cœur de réseau, notamment si le lien entre une station de base et le cœur du réseau est perdu ou non fonctionnel. Un cas d'usage typique est par exemple celui des forces de sécurité et de secours (police, pompiers, ambulances, etc.) qui doivent pouvoir collaborer et communiquer entre elles suite par exemple à une catastrophe naturelle, comme un tremblement de terre ou un raz de marée ayant pour conséquence immédiate la mise hors service des installations de communication à terre qui participent au réseau de backhaul et/ou au cœur de réseau. Il existe donc le besoin d'une solution permettant de mettre en place un réseau de backhaul de substitution entre les terminaux mobiles et/ou les cellules mobiles, pour pallier la défaillance du réseau de backhaul standard et/ou des équipements du cœur de réseau.

En résumé, notamment mais pas uniquement dans le contexte évoqué ci-dessus, il peut être utile pour des applications spécifiques d'établir des liaisons de communication entre plusieurs stations de base de structures mobiles, afin de rendre les échanges de données entre ces structures mobiles autonomes par rapport au cœur du réseau.

Néanmoins dans ce contexte se pose la question du protocole d'établissement d'une liaison directe ou indirecte entre stations de base et notamment du niveau de sécurité lui étant associé. Il a par exemple été proposé une station de base comprenant une unité de gestion configurée pour créer une pluralité de terminaux d'utilisateurs virtuels qui sont adaptés pour communiquer conformément audit protocole radio avec des stations de base voisines de ladite station de base, en utilisant ledit module d'interface radio. De telles stations de base implémentées dans des structures mobiles comme des navires, permettent de créer un réseau de transport de données de type backhaul entre les structures mobiles, qui peut présenter une topologie maillée. Ce réseau de backhaul maillé permet de transmettre directement entre stations de base des données selon par exemple le protocole de l'interface LTE-Uu pour des stations de base LTE (i.e., des eNodeBs). Dans un tel système, toutefois, lorsqu'une station de base communique avec un terminal virtuel associé à une station de base voisine, elle le fait sur la même bande de fréquence que celle qu'elle utilise déjà pour communiquer avec les terminaux mobiles présents dans sa cellule mobile. De ce fait, les risques d'interférences entre liens radio sont élevés. En outre, une telle solution pourrait nécessiter des modifications de l'EPC et pose question en termes de sécurité (Réseau d'accès radio LTE/LTE-A autonome et maillé pour environnements contraints, Romain FAVRAUD, Thèse de Doctorat soutenue publiquement le 22 novembre 2017).

Une solution décrite dans la demande de brevet n° WO2016178554 consiste en un procédé de transmission et de réception d'un signal dans un IOPS (fonctionnement E-UTRAN isolé pour la sécurité publique) par un relais dans un système de communication sans fil. Dans un tel procédé, les informations relatives à l'adresse IP du terminal distant sont des informations de mappage entre l'adresse IP du terminal relais qui a été allouée à partir de l'EPC (evolved packet core) local et de l'adresse IP du terminal distant. Un tel procédé permet d'éviter à un équipement utilisateur distant de réattribuer l'adresse IP, et évite de s'enregistrer individuellement dans le noyau IMS (IP multimedia system) connecté à l'EPC local du terminal distant.

Une solution pourrait reposer sur l'établissement d'une liaison de type liaison en mode directe de façon à créer une liaison entre la structure mobile correspondante et une ou plusieurs autres structures mobiles. Un réseau de backhaul entre différentes structures mobiles peut ainsi être établi, le cas échéant avec une topologie maillée, par exemple, par l'intermédiaire d'entités de liaison prévues dans chacune des structures mobiles concernées, et qui peuvent être des terminaux spécifiquement dédiés à ces liaisons en mode direct. Cependant, ce type de liaison ne permet plus d'utiliser l'infrastructure réseau habituellement utilisée pour gérer les aspects de sécurité selon les techniques connues des normes LTE du consortium 3GPP, par exemple. Ces techniques connues utilisent les secrets partagés entre un serveur HSS (mis pour « Home Subscriber Server », en anglais) du cœur du réseau, et une carte USIM (mis pour « Universal Subscriber Identity Module », en anglais) des terminaux de communications mobiles, et utilisant le protocole EMM entre une entité MME (mis pour « Mobility Management Entity », en anglais) et un terminal de communication mobile (UE) via une eNodeb et l'interface radio LTE-Uu entre ladite eNodeB et ledit UE. L'entité MME est l'équipement des réseaux LTE qui gère la signalisation (plan de contrôle, ou « C-plane » en anglais) entre les terminaux de communication mobile (UE) et le cœur de réseau LTE. Le module USIM est défini par les spécifications 3GPP TS 21.111. Il prend la forme, par exemple, d'une carte à puce. Il stocke des informations permettant l'authentification de l'abonné (un « abonné » correspondant à un terminal de communication mobile) lors d'une connexion du terminal de communication mobile au réseau, en utilisant le numéro IMSI (de l'anglais « International Mobile Subscriber Identity ») qui est stocké dans la carte et qui permet une identification univoque de l'abonné. A cet effet, le numéro IMSI est un numéro unique, qui permet l'authentification d'un abonné c'est-à-dire aussi un terminal de communication mobile d'un utilisateur. Le module USIM stocke aussi des clés de sécurité pour chiffrer les données transmises, et pour garantir leur intégrité.

En effet, lors d'un établissement de connexion dUE-dUE (selon un mode appelé « mode D2D » dans la présente description), le eNodeb et l'interface Uu ne sont pas utilisés. Le cadre prévu dans les normes LTE pour la gestion de la sécurité avec utilisation du module USIM et du serveur HSS (échange de secrets partagés) ne peut donc pas être utilisé en l'état pour l'authentification, le chiffrement et le contrôle d"intégrité.

Ainsi, il existe un besoin pour un procédé ou un système permettant de gérer l'authentification par une station de base d'un ou de plusieurs terminaux mobiles associées à une ou plusieurs autres stations de base et connecté à la station de base via une connexion en mode direct.

### [Problème technique]

L'invention a pour but de remédier aux inconvénients de l'art antérieur. En particulier, l'invention a pour but de proposer une alternative permettant de se passer de l'infrastructure fixe du réseau pour la gestion des aspects d'authentification, notamment l'authentification d'un terminal mobile tel qu'une entité de liaison dUE d'une structure mobile qui participe à l'établissement d'une liaison en mode direct avec une entité de liaison dUE d'une autre structure mobile, tout en utilisant les techniques d'authentification standardisées.

### [Brève description de l'invention]

A cet effet, un premier aspect de l'invention propose un système de communication comprenant au moins deux structures mobiles ayant chacune :
- au moins une station de base adaptée pour établir des liaisons de communication cellulaire avec des terminaux de communication mobiles de la structure mobile via une interface radio déterminée,
- un serveur de souscription d'abonnés adapté pour gérer des informations de sécurité pour l'authentification des terminaux de communication mobiles de la structure mobile ;
- une entité de gestion de la sécurité adaptée pour dialoguer avec le serveur de souscription d'abonnés afin d'obtenir et de stocker des informations de sécurité associées aux terminaux de communication mobiles servis par la station de base ;
- au moins une entité de liaison adaptée pour établir une liaison en mode direct avec l'entité de liaison de l'autre structure mobile, ladite entité de liaison ayant un module d'identification adapté pour stocker un identifiant unique associé à l'entité de liaison ; et,
- un émulateur de l'entité de gestion de la sécurité de la structure mobile, accessible par l'entité de liaison et adapté pour émuler l'interface d'accès au serveur de souscription d'abonnés de ladite structure mobile ; et,
- un module proxy adapté pour transporter une requête d'authentification issue de l'entité de liaison de l'autre structure mobile jusqu'à l'émulateur de l'entité de gestion de la sécurité de la structure mobile, pour l'authentification de ladite entité de liaison de l'autre structure mobile sur le serveur de souscription d'abonnés de la structure mobile, sur la base de l'identifiant unique de ladite entité de liaison de l'autre structure mobile.

L'idée à la base de l'invention est d'utiliser les entités HSS locale et distante, c'est-à-dire de la structure mobile locale et de la structure mobile distante, respectivement, ainsi que la carte USIM des entités de liaison locale et distante correspondantes, afin de gérer la sécurité de chaque entité de liaison dUE et notamment ce qu'on appellera la sécurité distante de l'entité dUE (c'est-à-dire le droit de l'entité dUE d'une structure mobile donnée de se connecter avec une entité dUE distante appartenant à une structure mobile distante), lorsque les entités de liaison établissent une liaison de transport de données de type Backhaul en mode direct entre les deux structures mobiles. A cet effet, chaque structure mobile comprend un émulateur de MME (pour les entités de liaison dUE uniquement), et chaque entité de liaison offre à la (ou aux) entités(s) de liaison dUE distante(s) un accès à cet émulateur de MME via un proxy.

Un avantage de l'invention, notamment, est de permettre l'utilisation de terminaux de communication mobiles utilisant les techniques d'authentification connues, en tant qu'entités de liaison pour l'établissement des liaisons de transport de données de type backhaul entre des structures mobiles du système. Le nouveau chemin de transport selon l'invention mis en œuvre par le système selon l'invention permet avantageusement l'utilisation d'un module d'identification tel qu'un module USIM et des protocoles d'accès classiques pour authentifier l'entité de liaison vis à vis du système, et cela comme un terminal de communication mobile standard.

Un autre avantage du fait que les aspects d'authentification soient supportés par la liaison D2D entre les entités de liaison respectives des structures mobiles, est de pouvoir utiliser (en sus de l'unicast) un protocole point-multipoint qui permet de réaliser des acquisitions de signalisation multiples.

Dans un mode de réalisation, l'émulateur de MME de chaque structure mobile est adapté pour supporter le chiffrement et/ou la protection de l'intégrité des données de la même manière que l'authentification des terminaux de liaison. Avantageusement, l'intégrité et le chiffrement du plas C-plane (données de signalisation) et le chiffrement du plan U-plane (données d'utilisateur) sont également supportés.

En sus de l'authentification, en effet, le principe selon l'invention peut également être appliqué pour gérer le chiffrement et le contrôle d'intégrité pour le transport de données de type backhaul entre les structures mobiles via leurs entités de liaison dUE respectives.

En complément, l'émulateur de MME de chaque structure mobile peut aussi supporter l'authentification et la sécurité locale de l'entité dUE de la structure mobile avec le serveur HSS local de ladite structure mobile afin d'avoir l'autorisation d'opérer en local.

A cet effet, l'interface propriétaire (par exemple de type EMM' comme évoqué plus loin) peut être utilisée entre l'émulateur de MME et un proxy adapté pour l'accès local à la carte USIM d'un terminal de liaison dUE, pour les échanges dans le cadre des procédures de sécurité, à partir d'une lecture et d'un accès local à la carte USIM, pour l'authentification locale, c'est-à-dire l'identification au serveur HSS local, du terminal dUE local.

En outre, dans le cas d'un terminal dUE d'une structure mobile fonctionnant en mode UE standard via l'interface LTE-Uu d'une autre structure mobile, il peut être authentifié au serveur HSS distant de ladite autre structure mobile.

Selon d'autres caractéristiques avantageuses du système :
- l'interface radio déterminée est comprise parmi des interfaces radio adaptées pour permettre l'allocation de ressources radio à une liaison en mode direct et pour permettre son utilisation dans un réseau de communication mobile tel qu'un réseau LTE, 5G, Wimax, 3G, Wifi ou Bluetooth.
- le module proxy d'une structure mobile est implémenté dans l'entité de liaison de ladite structure mobile. Cela permet de pouvoir utiliser une station de base classique sans modification dédiée alors que l'entité de liaison comporte l'essentiel des éléments nécessaires à l'établissement des liaisons de transport de données de type backhaul.
- l'entité de liaison d'une structure mobile comprend en outre un module d'accès local adapté pour assurer l'accès au module d'identification de l'entité de liaison afin de lire l'identifiant unique associé à l'entité de liaison.
- l'émulateur de l'entité de gestion de la sécurité de chaque structure mobile est adapté pour supporter une interface d'accès au serveur de souscription d'abonnés de ladite structure mobile basée sur l'interface S6a des normes LTE du consortium 3GPP. Bien que l'invention ne soit pas limitée aux interfaces S6a, elle est particulièrement adaptée à un fonctionnement en lien avec une interface S6a.
- une interface d'accès à l'émulateur de l'entité de gestion de la sécurité de la structure mobile qui est supportée par le module proxy de l'entité de liaison de la structure mobile est basée sur le protocole EMM des normes LTE du consortium 3GPP.
- l'émulateur de l'entité de gestion de la sécurité de chaque structure mobile et le module proxy de l'entité de liaison de ladite structure mobile sont adaptés pour permettre à l'entité de liaison de l'autre structure mobile de réaliser une requête d'authentification sur le serveur de souscription d'abonné de ladite structure mobile, dans le cadre de l'établissement d'une liaison directe entre l'entité de liaison de la structure mobile et ladite entité de liaison de l'autre structure mobile.
- l'émulateur de l'entité de gestion de la sécurité d'une structure mobile est adapté pour permettre à l'entité de liaison de ladite structure mobile de réaliser une requête d'authentification sur le serveur de souscription d'abonné de ladite structure mobile sans passer par l'interface radio de la station de base de la structure mobile.
- l'entité de liaison d'une structure mobile est en outre configurée pour établir une liaison de communication cellulaire avec la station de base de l'autre structure mobile via l'interface radio de ladite station de base de l'autre structure mobile.
- l'entité de gestion de la sécurité d'une structure mobile est adaptée pour permettre à l'entité de liaison de l'autre structure mobile de réaliser une requête d'authentification sur le serveur de souscription d'abonné de ladite structure mobile.
- l'entité de liaison d'une structure mobile est adaptée pour supporter le chiffrement et la protection de l'intégrité des données reçues de l'entité de liaison de l'autre structure mobile via la liaison en mode direct, sur la base d'une clé de sécurité stockée en outre dans le module d'identification de l'entité de liaison de ladite autre structure mobile.
- l'intégrité et le chiffrement des données comprend l'intégrité et le chiffrement des données transmises dans le plan C-plane et le chiffrement dans le plan U-plane des normes LTE du consortium 3GPP.
- les entités de liaison des structures mobiles forment entre elles un réseau de backhaul.
- l'entité de liaison d'une structure mobile est configurée pour établir une liaison en mode direct avec l'entité de liaison respective d'au moins deux autres structures mobiles selon un protocole point-multipoint.

Selon un autre aspect, l'invention porte sur un procédé d'authentification mutuelle d'entités de liaison de structures mobiles respectives d'un système de communication selon le premier aspect, pour l'établissement d'une liaison en mode direct entre lesdites entités de liaison, ledit procédé comportant les étapes de :
- transmission, à l'entité de liaison de chaque structure mobile, d'une requête d'authentification sur le serveur de souscription d'abonnés de ladite structure mobile provenant de l'entité de liaison de l'autre structure mobile ;
- transport, par l'intermédiaire des module proxy respectifs de chaque structure mobile, de la requête d'authentification reçue de l'entité de liaison de l'autre structure mobile, à l'émulateur de l'entité de gestion de la sécurité de chaque autre structure mobile ; et,
- présentation, aux serveurs de souscription d'abonnés respectifs de chaque structure mobile, par les émulateurs de l'entité de gestion de la sécurité respectifs de chaque structure mobile, de la requête d'authentification provenant de l'entité de liaison de l'autre structure mobile, pour l'authentification de ladite entité de liaison de l'autre structure mobile sur le serveur de souscription d'abonnés de la structure mobile.

D'autres avantages et caractéristiques de l'invention apparaitront à la lecture de la description suivante donnée à titre d'exemple illustratif et non limitatif, en référence aux figures des dessins annexés dans lesquels :

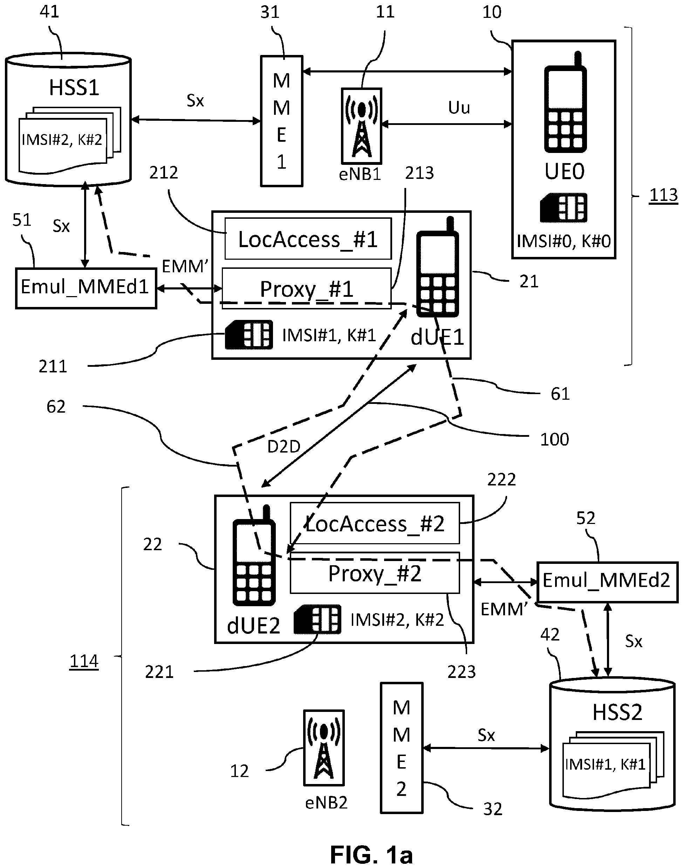

[Fig. 1a] est un schéma fonctionnel illustrant un système de communication avec les mobiles comprenant deux structures mobiles et illustrant en outre la gestion de l'authentification mutuelle des entités de liaison respectives desdites structures mobiles dans le cadre de l'établissement d'une liaison en mode direct entre lesdites structures mobiles selon des modes de réalisation de l'invention ;

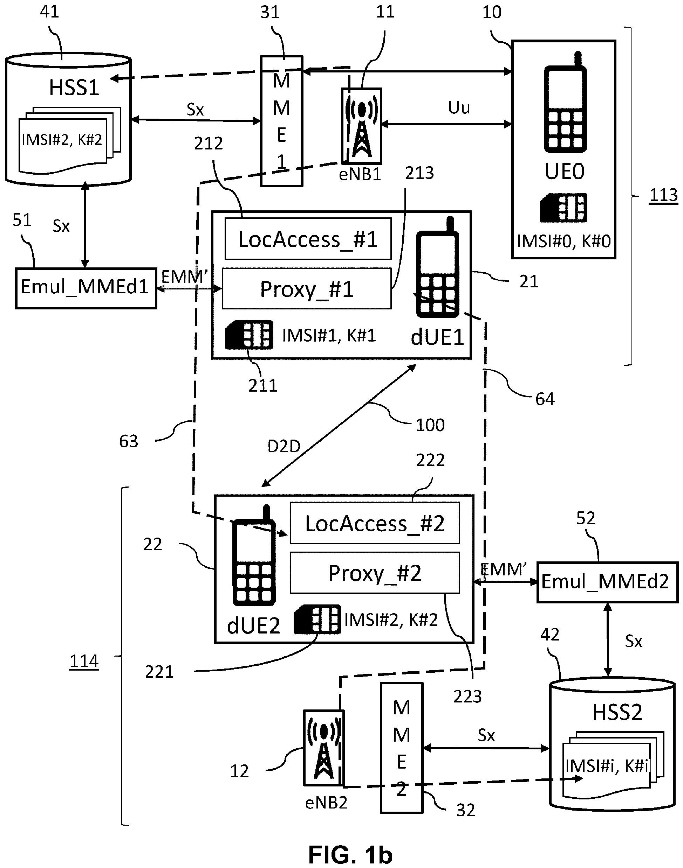

[Fig. 1b] est un schéma fonctionnel du système de communication avec les mobiles de la figure 1a illustrant en outre la gestion de l'authentification distante des entités de liaison respectives de chacune des structures mobiles lorsqu'elles sont utilisées comme terminaux mobiles standards dans l'autre desdites structures mobiles ;

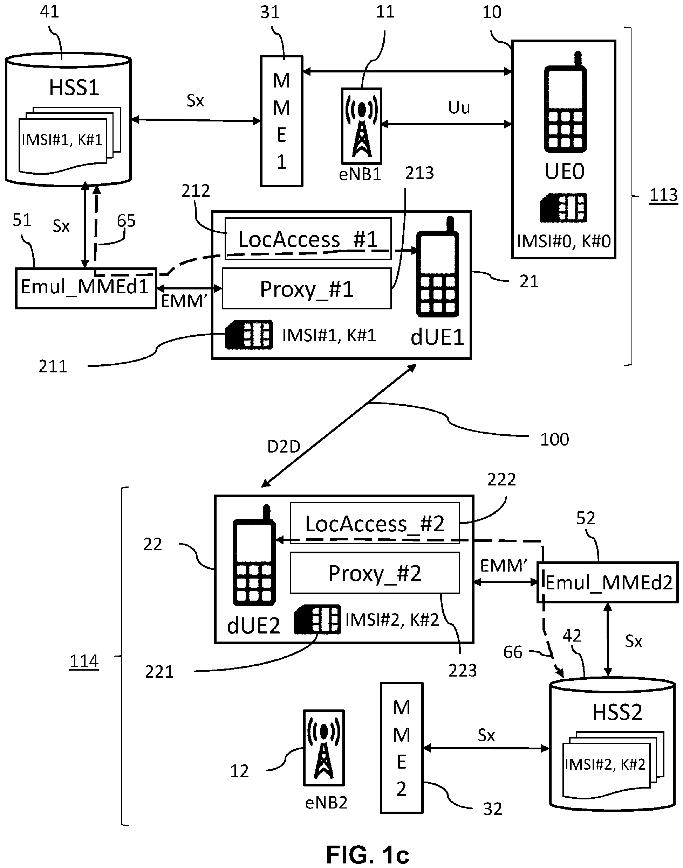

**[****Fig. 1c****]** est un schéma fonctionnel du système de communication avec les mobiles de la figure 1a illustrant en outre la gestion de l'authentification locale des entités de liaison respectives de chacune des structures mobiles sur le serveur de souscription d'abonné desdites structures mobiles ;

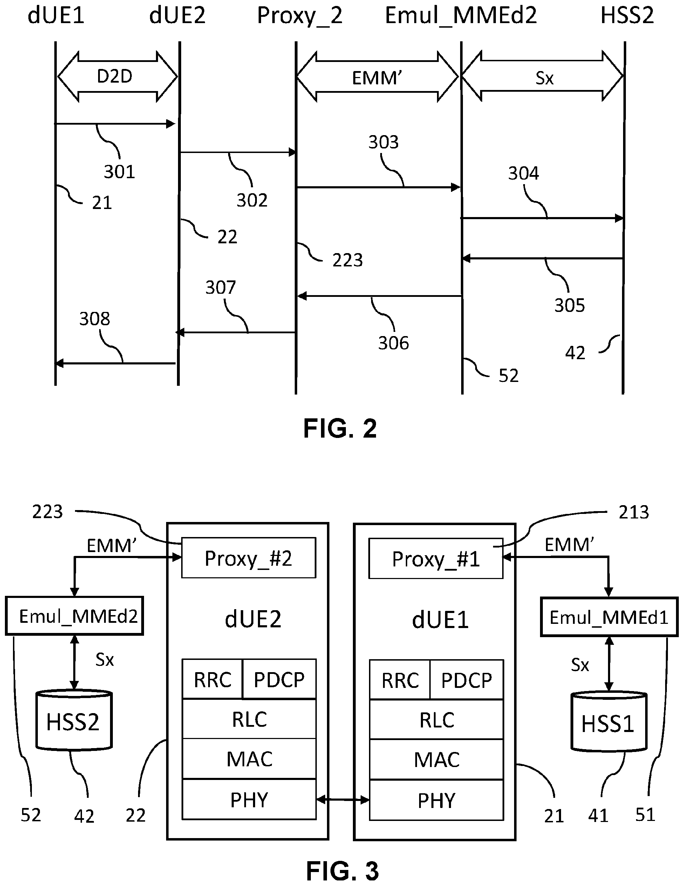

[Fig. 2] est un schéma illustrant les échanges de secrets partagés entre les entités de liaison du système de la figure 1, pour l'authentification mutuelle desdites entités de liaison lors de l'établissement de la liaison en mode direct ; et,
[Fig. 3] est un schéma illustrant un mode de réalisation d'une entité de liaison d'une structure mobile du système de la figure 1.

### [Description de l'invention]

En référence au schéma de **la** **figure 1a**, il va tout d'abord être décrit un mode de réalisation d'un système de radiocommunication mobile ayant des structures mobiles selon l'invention.

Dans le cadre de la présente description, on appelle « entités de liaison » ou « terminaux de liaison » et on note dUE, de tels terminaux dédiés qui sont adaptés pour établir des liaisons de transport de données de type backhaul entre des structures mobiles du système de communication avec les mobiles.

Les termes « structure mobile » désignent une entité qui comprend des moyens de communications cellulaire avec des terminaux d'utilisateur appartenant à la structure mobile, et qui est elle-même mobile c'est-à-dire qu'elle peut être en mouvement, stationnaire (i.e., immobile) ou nomade (i.e., alternant des phases de mobilité et des phases stationnaires).

Le terme « direct » utilisé de manière générale en référence à des modes de communication entre deux entités, signifie qu'aucune entité intermédiaire n'intervient dans ces communications pour le transport de données entre l'entité émettrice et l'entité réceptrice. Lorsqu'il est utilisé de manière particulière en référence à un mode de communication entre des structures mobiles telles que définies ci-dessus, le terme « direct » signifie que le transport de données entre deux structures mobiles se fait sans l'intervention du cœur de réseau par l'intermédiaire duquel ces structures mobiles établissent normalement leurs communications.

Dans l'exemple représenté à la figure 1a, les structures mobiles 113 et 114 sont chacune équipées de stations de bases 11 et 12, qu'on nommera dans la suite simplement eNB1 et eNB2, par référence au jargon de la norme LTE bien que l'invention ne soit pas limitée au contexte des systèmes LTE. L'invention s'applique aussi, par exemple, à des réseaux selon les normes GSM ou UMTS telles que définies par le consortium 3GPP mais également à des réseaux de communication mobile comportant des interfaces radio adaptées pour permettre l'allocation de ressources radio à une liaison en mode direct tel qu'un réseau 5G, Wimax, Wifi ou Bluetooth.

Les structures mobiles comprennent chacune au moins un terminal de liaison dédié 21 et 22, respectivement, appelé un terminal dUE (mis pour « *dedicated User Equipment* » en anglais). Ces entités de liaison sont spécifiquement dédiées à l'établissement d'au moins une liaison 100 en mode direct (D2D) entre les deux stations de base 11 et 12 qui servent les structures mobiles 113 et 114, respectivement. En particulier, cette liaison 100 en mode direct assure le transport de données de type backhaul, c'est-à-dire qu'elle est utilisée pour établir un réseau de backhaul, entre différentes structures mobiles 113 et 114 nonobstant leur éloignement hors de la portée, ou la panne ou la destruction, d'équipements fixes d'un cœur de réseau assurant normalement cette fonction.

Dans les cas d'usage en stationnaire, c'est-à-dire lorsqu'une telle structure mobile ne bouge pas et est à portée radio d'équipements fixes du cœur de réseau qui sont opérationnels, la station de base de la structure mobile est capable de communiquer sous protocole IP avec ces équipements par l'intermédiaire desquels elle peut échanger des données de type backhaul avec la station de base d'une autre structure mobile. Lorsque la structure mobile est en mouvement mais demeure à portée radio d'un tel équipement fixe du cœur de réseau qui est opérationnel, ces communications sont également possibles et sont donc utilisées.

Outre le cas d'usage décrit plus haut, les liaisons en mode direct visées par l'invention sont aussi, et plus particulièrement, des liaisons qui sont établies entre des structures mobiles, conformément à des modes de réalisation, par exemple lorsqu'elles sont en mouvement et se trouvent ensemble à des distances au-delà de la portée radio des stations de base embarquées avec les équipements fixes du cœur de réseau, ou lorsque ces équipements sont en panne ou détruits. Ainsi, par exemple, comme il sera aussi présenté plus en détail plus loin, deux navires se déplaçant en haute mer peuvent, par la mise en œuvre de l'invention, mettre en place une liaison en mode direct pour le transport de données de type backhaul entre eux. En résumé, l'invention s'applique à des liaisons en mode direct établies aussi bien entre deux structures mobiles en mouvement, qu'entre une structure mobile en mouvement et une structure mobile stationnaire ou encore entre deux structures mobiles stationnaires.

Les stations de base 11 et 12, respectivement, sont par exemple des stations de base telles qu'elles sont couramment utilisées dans les réseaux de radiocommunication mobile basés sur les normes de communication des réseaux 3G, 5G, Wimax, Wifi, Bluetooth ou en particulier LTE du consortium 3GPP. De façon connue de l'homme du métier, et conformément aux normes LTE, elles constituent la passerelle entre le cœur du réseau LTE de transport de données par protocole IP, d'une part, et les terminaux de communication mobiles, ou équipements utilisateurs UEs (de l'anglais « *User Equipment* ») comme le terminal mobile 10 de la structure mobile 113, d'autre part. En particulier, les stations de base 11 et 12 desservent des zones géographiques définies par l'étendue de leur couverture radio. Ces zones géographiques forment des cellules radio (non-représentées) au sein desquelles des communications radios sont établies entre chaque station de base et les terminaux mobiles (i.e. les UEs) qui lui sont raccordés par des liaisons de communication cellulaire, via l'interface radio LTE-Uu standard des normes LTE, par exemple, pour un système selon les normes LTE. Pour des raisons de lisibilité, seul un terminal mobile 10 de la structure mobile 113 est représenté à la figure 1a. Toutefois, l'homme du métier appréciera que le nombre de terminaux mobiles dans chaque structure mobile puisse évidemment être supérieur à l'unité. Plus généralement, l'exemple de système de communication avec les mobiles représenté à la figure 1a n'est pas limitatif, et l'homme du métier appréciera que l'invention puisse s'appliquer à un nombre de structures mobiles supérieur ou égal à deux.

Les stations de base 11 et 12 utilisent des interfaces radio standard, par exemple l'interface radio LTE-Uu des normes LTE, pour établir des liaisons de communication cellulaire avec l'ensemble des UEs qui sont présents dans la cellule qu'elles servent et qui sont connectés à la station de base. Les terminaux présents dans les cellules respectivement associées aux différents eNodeB peuvent donc être des terminaux LTE standards, c'est-à-dire des terminaux qui ne nécessitent aucune capacité spécifique pour pouvoir être utilisés dans ce contexte. En particulier, ces terminaux peuvent être entièrement compatibles avec les normes LTE du consortium 3GPP.

Outre les entités de chacune des structures mobiles 113 et 114 déjà mentionnées dans ce qui précède, celles-ci intègrent aussi des équipements d'utilisateur dédiés dUEs, ou entités ou terminaux de liaison 21 et 22, respectivement. Comme il a déjà été évoqué plus haut, les dUEs 21 et 22 permettent d'établir des liaisons directes pour le transport de données de type backhaul entre les deux structures mobiles 113 et 114. Plus précisément, il s'agit de liens en mode direct, notés D2D dans la suite, c'est-à-dire sans équipement intermédiaire. Ces liens peuvent similaires aux liens dits « *device-to-device* ». Les terminaux de liaison dUEs, déjà présentés plus haut, sont spécifiquement adaptées à cette utilisation.

L'homme du métier appréciera que les entités de liaison 21 et 22 peuvent être configurées comme des terminaux mobiles standards, et donc avoir un module d'identification 211 ou 221, respectivement tel qu'une carte USIM (de l'anglais « Universal Indentification Module ») au sens des normes LTE. Une telle carte USIM permet notamment l'identification de l'entité de liaison et, à cet effet, elle est notamment adaptée pour stocker un identifiant unique du type IMSI (de l'anglais « *International Mobile Subscriber Identity* »), noté IMSI#1 dans la suite et aux figures. Cet identifiant est associé de manière univoque à l'entité de liaison. La carte USIM peut être par ailleurs adaptée pour stocker, en outre, au moins une clé de sécurité notée K#i qui est elle aussi associée à l'entité de liaison. Plus précisément, chaque entité de liaison (i.e. chaque dUE) est associée à un IMSI authentifié par une clé K. Toutefois une clé K peut être dérivée pour générer une pluralité de clés K qui permettent d'assurer le chiffrement et le contrôle d'intégrité des données échangées avec l'entité de liaison. Ces clés de sécurité comprennent notamment des clés de chiffrement.

Chaque structure mobile 113 et 114 intègre aussi un serveur de souscription d'abonnés 41 et 42, respectivement, par exemple un HSS (de l'anglais « *Home Subscriber Server* ») tel que défini dans la norme 3GPP pour les réseaux LTE ou encore par exemple un système d'authentification de type VLR (de l'anglais « *Visitor Location Register* »). Chacun des serveurs de souscription d'abonnés 41 et 42 est adapté pour identifier des terminaux de communication mobiles et pour gérer des informations de sécurité pour l'authentification des terminaux de communication mobiles avec lesquels il est établi des liaisons de communication. En outre, comme les entités de liaison peuvent être configurées comme des terminaux mobiles standards, les informations d'authentification associées aux entités de liaison peuvent aussi être gérées par les serveurs de souscription d'abonnées. Dit autrement, le serveur de souscription d'abonnés 41 ou 42 de chaque structure mobile 113 ou 114, respectivement, stocke les identifiants IMSI#i ainsi que les clés de sécurité K#i associés à tous les terminaux mobiles UE et aux entités de liaison dUE qui peuvent potentiellement être servis par la station de base 11 ou 12, respectivement, de ladite structure mobile. En résumé, au niveau de la gestion de la base de données, c'est-à-dire du serveur de souscription d'abonnés, il est possible d'administrer aussi bien des UEs standard (i.e. gérés sur Uu eNodeb / UE par MME standard) que des dUEs destinés aux liaisons en mode direct et donc à un accès de transport de données distant (utilisés pour des liens de 'bakhaul' avec des bulles ou infrastructures distantes).

Enfin, chacune des structures mobiles 113 et 114 intègre aussi une entité de gestion 31 et 32, respectivement, qui est par exemple une entité de type MME (de l'anglais « *Mobility Managment Entity* ») en référence aux normes LTE ou de type S4-SGSN, pour la gestion de la sécurité du système. Ces entités de gestion de la sécurité sont adaptées pour dialoguer avec le serveur de souscription d'abonnés 41 ou 42, respectivement, de la structure mobile correspondante 113 ou 114, respectivement, afin d'obtenir et de stocker des informations de sécurité associées aux terminaux de communication mobiles connectés à, et servis par la station de base 11 ou 12, respectivement, de ladite structure mobile. Ces entités de gestion peuvent en particulier générer et gérer des requêtes d'authentification (Authentication-Information-Request en terminologie anglo-saxonne) et leur réponse afin d'obtenir du HSS des vecteurs d'authentification

L'homme du métier appréciera que, dans des modes de réalisation particuliers, le serveur de souscription d'abonnés HSS et l'entité de gestion de la sécurité MME de chaque structure mobile soient intégrés à un cœur de réseau, dit cœur de réseau local par opposition aux équipements de réseau fixes du cœur de réseau eNB d'un système LTE standard, car il est lui-même intégré à la structure mobile.

Pour permettre aux structures mobiles de gérer de manière autonome, c'est-à-dire indépendamment d'équipements fixe du cœur de réseau eNB, l'authentification mutuelle de leurs entités de liaison respectives, lesquelles communiquent entre elles via une liaison en mode direct pour établir une liaison de transport de données de type backhaul, chaque structure mobile 113 et 114 intègre aussi plusieurs entités spécifiques. Au niveau local de chaque structure mobile, le rôle de ces entités est de permettre à une entité de liaison distante (i.e. appartenant à une autre structure mobile, ou structure mobile distante) de s'authentifier auprès du serveur de souscription d'abonnés HSS de la structure mobile locale.

Ainsi, chacune des structures mobiles 113 et 114 est équipée d'un émulateur de l'entité de gestion de la sécurité, respectivement 51 et 52, appelé dans la suite émulateur de MME par raccourci. Chacun des émulateurs de MME 51 et 52 est accessible par l'entité de liaison 21 ou 22 de la structure mobile en question, et qui permet d'émuler l'interface d'accès au serveur de souscription d'abonnés 41 ou 42, respectivement, de ladite structure mobile. Dans un exemple non-limitatif, une telle interface d'accès peut être une interface de type S6a telle qu'elle est définie dans les normes LTE du consortium 3GPP. De manière plus générale, dans les différents modes de réalisation de l'invention, cette interface, notée Sx dans les figures, peut-être une interface standard du type S6a ou S6d par exemple, ou une interface propriétaire basée sur une telle interface standard. En outre, alternativement à l'utilisation d'un serveur HSS en tant que système d'authentification, l'authentification peut aussi utiliser, dans des modes de réalisation particulier, un système d'authentification de type VLR (de l'anglais « *Visitor Location Register* »).Additionnellement, chaque entité de liaison 21 et 22 comprend en outre un module, 212 et 222, respectivement, dit module d'accès local, qui est adapté pour permettre l'accès à son module d'identification 211 ou 221, respectivement. Enfin, chaque entité de liaison 21 et 22 comprend encore un module proxy 213 et 223, respectivement, aussi appelé proxy par raccourci dans ce qui suit, qui est adapté pour transporter à l'émulateur 51 ou 52 de la structure mobile correspondante 113 ou 114, respectivement, des requêtes d'authentification issues d'une entité de liaison distante appartenant à l'autre structure mobile. En l'espèce, le module proxy 213 de l'entité de liaison 21 peut transporter des requêtes d'identification vers l'émulateur 51 du serveur de souscription d'abonnés 41 de la structure mobile 113. Et, réciproquement, le module proxy 223 de l'entité de liaison 22 peut transporter des requêtes d'identification vers l'émulateur 55 du serveur de souscription d'abonnés 42 de la structure mobile 114. En outre, dans un mode de réalisation particulier du système, l'interface d'accès à l'émulateur de l'entité de gestion de la sécurité de chaque structure mobile qui est supportée par le module proxy de l'entité de liaison de la structure mobile peut être une interface propriétaire qui est basée sur le protocole EMM (de l'anglais « *EPS Mobility Management* ») des normes LTE du consortium 3GPP. Une telle interface propriétaire est notée EMM' dans la suite et aux figures.

Finalement, l'émulateur de MME de chaque structure mobile et le proxy de l'entité de liaison de ladite structure mobile sont adaptés pour permettre à l'entité de liaison de l'autre structure mobile de réaliser une requête d'authentification sur le serveur de souscription d'abonné de ladite structure mobile. Ainsi, dans l'exemple représenté à la figure 1a, lors de l'établissement d'une liaison en mode direct entre les entités de liaison 21 et 22, les modules proxy 213 et 223 et les émulateurs de MME 51 et 52 permettent aux deux entités de liaison 21 et 22 de chacune des structures mobiles 113 et 114, respectivement, de s'authentifier mutuellement, i.e. de réaliser des échanges de secrets partagés, uniquement en échangeant indirectement avec le serveur de souscription d'abonnés 41 et 42, respectivement, de l'autre structure mobile. Dit autrement, du point de vue des échanges de secrets, les entités de liaison s'authentifient respectivement de manière classique auprès des serveurs de souscription d'abonné de l'autre structure mobile. La différence réside en particulier dans le chemin suivi pour les échanges réalisés dans le cadre de cette authentification. De préférence, la différence réside essentiellement dans le chemin suivi pour les échanges réalisés dans le cadre de cette authentification. A cet effet, le serveur 41 de la structure mobile 113 stocke l'identifiant IMSI#2 de l'entité de liaison 22 de la structure mobile 114, et réciproquement, le serveur 42 de la structure mobile 114 stocke l'identifiant IMSI#1 de l'entité de liaison 21 de la structure mobile 113.

Dans les différentes approches décrites plus haut pour l'authentification mutuelle d'entités de liaison distinctes de structures mobiles respectives, l'émulateur de l'entité de gestion de la sécurité d'une structure mobile peut aussi être adapté pour supporter, outre l'authentification, le chiffrement et la protection de l'intégrité des données du type backhaul à échanger par les entités de liaison entre elles. La procédure suivie est alors la même que celle décrite ici pour l'authentification mutuelle des entités de liaison. En outre, l'intégrité et le chiffrement des données peuvent être l'intégrité et le chiffrement pour des données de signalisation et des données utiles. Par exemple, l'intégrité et le chiffrement dans le plan C-plane et le chiffrement dans le plan U-plane, respectivement, des normes LTE du consortium 3GPP.

A cet effet, les clés de sécurité K#1 et K#2 respectivement associées aux entités de liaison 21 et 22 peuvent également être stockées dans les serveurs 42 et 41, respectivement, en plus des identifiants uniques IMSI#1 et IMSI#2 desdites entités de liaison, respectivement.

En référence au schéma de la **figure 1b**, l'homme du métier appréciera que au moins une entité de liaison 21 ou 22 de la structure mobile 113 ou 114, respectivement, peut être en configurée pour établir une liaison de communication cellulaire via l'interface radio déterminée LTE-Uu directement avec la station de base de l'autre structure mobile 114 ou 113, respectivement. Dans cette configuration, l'entité de gestion de la sécurité 31 ou 32 d'une première structure mobile 113 ou 114, respectivement, peut être adaptée pour permettre à l'entité de liaison d'une seconde structure mobile 114 ou 113, respectivement, de réaliser une procédure 63 ou 64, respectivement, d'authentification sur le serveur de souscription d'abonné 41 ou 42, respectivement, de ladite première structure mobile. En outre, de manière similaire à ce qui a été décrit plus haut, l'échange entre l'entité de liaison 21 ou 22 d'une première structure mobile 113 ou 114, respectivement, et le serveur de souscription d'abonnés 42 ou 41 d'une seconde structure mobile 114 ou 113, respectivement, par l'intermédiaire de l'entité de gestion de la sécurité 32 ou 31, respectivement, de ladite seconde structure mobile, peut aussi être réalisé selon le protocole propriétaire EMM'. On rappelle que dans un exemple, ce protocole propriétaire EMM' peut être basé par exemple sur le protocole EMM des normes LTE.

De façon complémentaire et non-indispensable, dans des modes de réalisation particulier de l'invention illustrés par la **figure 1c**, l'émulateur de MME 51 ou 52 de l'une au moins des structures mobiles 113 et 114, respectivement, peut aussi être adapté pour supporter une interface d'accès au module d'accès local 212 ou 222, respectivement, de l'entité de liaison de ladite structure mobile. Ainsi, l'interface d'accès au module d'accès local de l'entité de liaison 21 ou 22 de la structure mobile concernée 113 ou 114, respectivement, qui est supportée par l'émulateur de MME 51 ou 52, respectivement, de ladite structure mobile, est adaptée pour permettre à ladite entité de liaison de réaliser une requête d'authentification 65 ou 66 sur le serveur de souscription d'abonnés 41 ou 42, respectivement, de ladite structure mobile. On parle alors d'accès local dans le sens où il s'agit, pour l'entité de liaison, d'accéder au serveur de souscription d'abonnés de la structure mobile à laquelle il appartient afin lui-même de s'authentifier sur ledit serveur. On notera que cet accès est réalisé sans passer par l'interface radio LTE-Uu de la station de base 11 ou 12 de la structure mobile 113 ou 114, respectivement, et constitue donc une alternative aux méthodes connues d'accès au serveur 41 ou 42, respectivement, qui peut présenter des avantages dans certaines configurations ou dans certains cas d'usage.

Dans tous les cas de figure décrits plus hauts, les entités de liaison respectives d'une pluralité de structures mobiles qui sont reliées entre elles par des liaisons en mode direct peuvent ainsi former un réseau transport de données de type backhaul. Le réseau peut avoir une structure maillée. Avantageusement, un tel réseau peut se substituer à un réseau de backhaul fixe lorsqu'il est hors de portée radio, détruit ou inopérant. En outre, chaque entité de liaison peut aussi être configurée pour que les liaisons en mode direct qu'elle établit avec une ou plusieurs entités de liaison utilisent un protocole de type point-multipoint. Avantageusement, un tel protocole permet de réaliser la procédure d'authentification auprès de structures mobiles distantes différentes et pour des liaisons différentes mais à partir d'une même entité de liaison. De préférence, la procédure d'authentification auprès de structures mobiles distantes différentes met en œuvre une entité de liaison pour chacune des structures mobiles distantes différentes.

En référence à la **figure 2**, il va maintenant être décrit les échanges de secrets partagés entre les entités de liaison du système de la figure 1a. Les différentes étapes décrites plus loin sont réalisées lors de l'établissement d'une liaison en mode direct entre les deux entités de liaison de deux structures mobiles distinctes. Plus spécifiquement, la figure 2 montre la procédure d'authentification de l'entité de liaison 21 de la structure mobile 113 sur le serveur de souscription d'abonnés 42 de l'autre structure mobile 114. L'homme du métier appréciera que la procédure d'authentification de l'entité de liaison 22 de l'autre structure mobile 113 sur le serveur de souscription d'abonnés 41 de la structure mobile 113 est réciproque de celle décrite à la figure 2, et n'est pas décrite ici ni illustrée aux figures. Néanmoins, il va sans dire que l'authentification mutuelle des entités de liaisons 21 et 22 entre lesquelles est établie la liaison de transport de données en mode direct, appelle la mise en œuvre de ces deux procédures réciproques.

Lors de l'étape 301, l'entité de liaison 21 de la première structure mobile 113 (non-représentée dans la figure 2) émet une requête d'authentification et la transmet, via la liaison en mode direct 100, à l'entité de liaison 22 de la seconde structure mobile 114.

Lors de l'étape 302, l'entité de liaison 22 transmet la requête d'authentification, au module proxy 223 de la seconde structure mobile 114.

Lors de l'étape 303, le module proxy 223, transmet à son tour la requête d'authentification à l'émulateur de l'entité de gestion de la sécurité 52 de la seconde structure mobile 114. Comme il a déjà été dit plus haut en référence à la figure 1, cette transmission Sx peut, dans un exemple non-limitatif, utiliser une interface standard S6a ou S6d ou une interface propriétaire.

Lors de l'étape 304, l'émulateur de MME 52 de la seconde structure mobile 114 transmet la requête d'authentification au serveur de souscription d'abonnés 42 de la seconde structure mobile 114. Cette transmission Sx se fait, par exemple, via l'interface d'accès de type S6a, ainsi qu'il a été exposé plus haut en référence à la figure 1.

Lors de l'étape 305, le serveur de souscription d'abonnés 42 de la seconde structure mobile 114 émet en retour des informations d'authentification mutuelle des première et seconde entités de liaisons et transmet ces informations d'authentification, via l'interface d'accès, à l'émulateur de MME 52 de la seconde structure mobile 114.

Lors de l'étape 306, l'émulateur de MME 52 transmet les informations d'authentification au module proxy 223 de la seconde structure mobile 114.

Lors de l'étape 307, le module proxy 223 de la seconde structure mobile 114, transmet les informations d'authentification à l'entité de liaison 22 de ladite seconde structure mobile.

Enfin, lors de l'étape 308, l'entité de liaison 22 transmet, via la liaison en mode direct 100, les informations d'authentification à l'entité de liaison 21 de la première structure mobile 113.

L'homme du métier appréciera que les étapes du processus d'échange de secrets décrites plus haut sont décrites comme étant initiées par l'entité de liaison 21 mais qu'elles peuvent l'être aussi bien par l'entité de liaison 22, de la même façon. Le processus est en effet réciproque entre les deux entités de liaison qui établissent une liaison en mode direct entre elles. Grâce à l'invention, chacune peut échanger avec le serveur de souscription d'abonnés distant appartenant à la structure mobile de l'autre entité de liaison.

La **figure 3**, illustre l'empilement des couches de protocoles supportées par une entité de liaison 21 et 22, selon la représentation en couches du modèle d'interface des systèmes ouverts (ou OSI, de l'anglais « Open System Interface ») de l'ISO (« International Standard Organisation »). L'homme du métier appréciera que les mêmes couches soient supportées par toutes les entités de liaisons comme les entités de liaison d'un système tel que décrit dans ce qui précède en référence aux figures 1a-1c. Les couches protocolaires basses (i.e., en dessous de la couche application) sont répandues dans les réseaux de communication mobiles tels que les réseaux LTE selon la norme 3GPP, et n'ont donc pas besoin d'être décrites en elles-mêmes ici. Seules leurs fonctions génériques respectives seront donc mentionnées.

La couche PHY (mis pour couche « PHYsique ») contrôle le canal de communication physique entre les entités 21 et 22. En l'espèce la liaison en mode direct établie entre deux entités de liaison (dUE) 21 et 22 appartenant aux deux structures mobiles 113 et 114 de la figure 1 qui sont distantes l'une de l'autre, utilisent un canal radio. Elle implique par exemple l'utilisation de systèmes de modulation/démodulation, de codage, d'entrelacement des données, etc.

La couche MAC (de l'anglais « *Medium Access Control* ») gère l'accès au canal de communication, et le multiplexage sur un même canal de communication et/ou l'ordonnancement entre les différents « services ». Cette couche contrôle la couche sous-jacente, i.e. la couche PHY.

Au niveau au-dessus de la couche MAC, la couche RLC (de l'anglais « *Radio link Control* ») opère le découpage des données en « blocs » et la cryptographie de ces données pour assurer la sécurité.

Au même niveau la couche PDCP (de l'anglais « Packet Data Convergence Protocol ») gère le support de différents protocoles réseaux utilisés pour les transmissions, en particulier par l'intermédiaire des en-têtes des paquets de données.

Enfin, la couche RRC (de l'anglais « *Radio Ressource Control* ») gère l'utilisation des ressources radio faite par l'entité de liaison et contrôle les autres couches. En particulier, elle gère la signalisation et la configuration des commandes des couches PHY, MAC, et RLC.

Au niveau de la couche applicative venant par-dessus les couches protocolaires classiques décrites ci-dessus (couches basses), se trouve le code ou logiciel d'application qui implémente le proxy 213 ou 223 de l'entité de liaison 21 ou 22, respectivement. On rappelle que le proxy 223 de l'entité de liaison 22 de la structure mobile 114 a pour fonction de relayer une requête d'authentification émanant de l'entité de liaison 21 de la structure mobile 113, jusqu'au serveur de souscription d'abonnés 42 de la structure mobile 114, via l'émulateur de MME 52 de ladite structure mobile 114. Inversement, le proxy 213 de l'entité de liaison 21 de la structure mobile 113 a pour fonction de relayer une requête d'authentification émanant de l'entité de liaison 22 de la structure mobile 114, jusqu'au serveur de souscription d'abonnés 41 de la structure mobile 113, via l'émulateur de MME 51 de ladite structure mobile 113.

Bien que non représentés à la figure 3, les modules 212 et 222 d'accès local aux cartes USIM 211 et 221, respectivement, des entités de liaison 21 et 22, respectivement, peuvent également être implémentés sous la forme logicielle d'un code situé au niveau de la couche applicative, juste en-dessous ou au même niveau que les proxys 213 et 223, respectivement.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés.

Dans les revendications, le terme "comprendre" ou "comporter" n'exclut pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Enfin, les signes de référence aux dessins qui sont présentés entre parenthèses ne sauraient être compris comme limitant la portée de l'invention.

## Revendications

1. Système de communication comprenant au moins deux structures mobiles (113,114) ayant chacune :
- au moins une station de base (11,12) adaptée pour établir des liaisons de communication cellulaire avec des terminaux de communication mobiles (10) de la structure mobile via une interface radio déterminée,
- un serveur de souscription d'abonnés (41,42) adapté pour gérer des informations de sécurité pour l'authentification des terminaux de communication mobiles de la structure mobile ;
- une entité de gestion de la sécurité (31,32) adaptée pour dialoguer avec le serveur de souscription d'abonnés afin d'obtenir et de stocker des informations de sécurité associées aux terminaux de communication mobiles servis par la station de base ;
- au moins une entité de liaison (21,22) adaptée pour établir une liaison en mode direct (100) avec l'entité de liaison (22,21) de l'autre structure mobile (114,113), ladite entité de liaison ayant un module d'identification (211,221) adapté pour stocker un identifiant unique (IMSI#1,IMSI#2) associé à l'entité de liaison ; et,
- un émulateur (51,52) de l'entité de gestion de la sécurité de la structure mobile, accessible par l'entité de liaison et adapté pour émuler l'interface d'accès au serveur de souscription d'abonnés (41,42) de ladite structure mobile ; et,
- un module proxy (213,223) adapté pour transporter une requête d'authentification issue de l'entité de liaison (21,22) de l'autre structure mobile (114,113) jusqu'à l'émulateur (51,52) de l'entité de gestion de la sécurité (31,32) de la structure mobile (113,114), pour l'authentification de ladite entité de liaison (21,22) de l'autre structure mobile (114,113) sur le serveur de souscription d'abonnés (41,42) de la structure mobile (113,114), sur la base de l'identifiant unique (IMSI#2,IMSI#1) de ladite entité de liaison (21,22) de l'autre structure mobile (114,113).

2. Système selon la revendication 1, dans lequel l'interface radio déterminée est comprise parmi des interfaces radio adaptées pour permettre l'allocation de ressources radio à une liaison en mode direct et pour permettre son utilisation dans un réseau de communication mobile tel qu'un réseau LTE, 5G, Wimax, 3G, Wifi ou Bluetooth.

3. Système selon la revendication 1 ou la revendication 2, dans lequel le module proxy (213,223) d'une structure mobile (113,114) est implémenté dans l'entité de liaison (21,22) de ladite structure mobile.

4. Système selon l'une quelconque des revendications 1 à 3, dans lequel l'entité de liaison (21,22) d'une structure mobile (113,114) comprend en outre un module d'accès local (212,222) adapté pour assurer l'accès au module d'identification de l'entité de liaison (211,221) afin de lire l'identifiant unique (IMSI#1,IMSI#2) associé à l'entité de liaison.

5. Système selon l'une quelconque des revendications 1 à 4, dans lequel l'émulateur de l'entité de gestion de la sécurité (51,52) de chaque structure mobile (113,114) est adapté pour supporter une interface d'accès au serveur de souscription d'abonnés (41,42) de ladite structure mobile basée sur l'interface S6a des normes LTE du consortium 3GPP.

6. Système selon la revendication 5, dans lequel une interface d'accès à l'émulateur (52) de l'entité de gestion de la sécurité (32) de la structure mobile (114) qui est supportée par le module proxy (223) de l'entité de liaison (22) de la structure mobile est basée sur le protocole EMM des normes LTE du consortium 3GPP.

7. Système selon l'une quelconque des revendications 1 à 6, dans lequel l'émulateur (51,52) de l'entité de gestion de la sécurité (31,32) de chaque structure mobile (113,114) et le module proxy (213,223) de l'entité de liaison (21,22) de ladite structure mobile sont adaptés pour permettre à l'entité de liaison (21) de l'autre structure mobile (113) de réaliser une requête d'authentification sur le serveur de souscription d'abonné (42) de ladite structure mobile (114), dans le cadre de l'établissement d'une liaison directe entre l'entité de liaison (22) de la structure mobile (114) et ladite entité de liaison (21) de l'autre structure mobile (113).

8. Système selon l'une quelconque des revendications 1 à 7, dans lequel l'émulateur de l'entité de gestion de la sécurité (51,52) d'une structure mobile (113,114) est adapté pour permettre à l'entité de liaison (21,22) de ladite structure mobile (113,114) de réaliser une requête d'authentification (65,66) sur le serveur de souscription d'abonné (41,42) de ladite structure mobile (113,114) sans passer par l'interface radio de la station de base de la structure mobile.

9. Système selon l'une quelconque des revendications 1 à 8, dans lequel l'entité de liaison (21,22) d'une structure mobile (113,114) est en outre configurée pour établir une liaison de communication cellulaire avec la station de base (12,11) de l'autre structure mobile (114,113) via l'interface radio de ladite station de base (12,11) de l'autre structure mobile.

10. Système selon la revendication 8, dans lequel l'entité de gestion de la sécurité (31,32) d'une structure mobile (113,114) est adaptée pour permettre à l'entité de liaison (22,21) de l'autre structure mobile (114,113) de réaliser une requête d'authentification sur le serveur de souscription d'abonné (41,42) de ladite structure mobile.

11. Système selon l'une quelconque des revendications 1 à 10, l'entité de liaison (22) d'une structure mobile (114) est adaptée pour supporter le chiffrement et la protection de l'intégrité des données reçues de l'entité de liaison (21) de l'autre structure mobile (113) via la liaison en mode direct (100), sur la base d'une clé de sécurité (K#1) stockée en outre dans le module d'identification (212) de l'entité de liaison (21) de ladite autre structure mobile (113).

12. Système selon la revendication 11, dans lequel l'intégrité et le chiffrement des données comprend l'intégrité et le chiffrement des données transmises dans le plan C-plane et le chiffrement dans le plan U-plane des normes LTE du consortium 3GPP.

13. Système selon l'une quelconque des revendications 1 à 12, dans lequel les entités de liaison des structures mobiles forment entre elles un réseau de backhaul.

14. Système selon l'une quelconque des revendications 1 à 13, dans lequel l'entité de liaison d'une structure mobile est configurée pour établir une liaison en mode direct avec l'entité de liaison respective d'au moins deux autres structures mobiles selon un protocole point-multipoint.

15. Procédé d'authentification mutuelle d'entités de liaison (21,22) de structures mobiles (113,114) respectives d'un système de communication selon l'une quelconque des revendications 1 à 14, pour l'établissement d'une liaison en mode direct (100) entre lesdites entité de liaison (21,21),
ledit procédé comportant les étapes de :
- transmission à l'entité de liaison (21,22) de chaque structure mobile (113,114), d'une requête d'authentification sur le serveur de souscription d'abonnés de ladite structure mobile provenant de l'entité de liaison (22,21) de l'autre structure mobile (114,113) ;
- transport, par l'intermédiaire des module proxy (213,223) respectifs de chaque structure mobile (114,113), de la requête d'authentification reçue de l'entité de liaison de l'autre structure mobile, à l'émulateur (51,52) de l'entité de gestion de la sécurité de chaque autre structure mobile (114,113) ; et,
- présentation, aux serveurs de souscription d'abonnés (41,42) respectifs de chaque structure mobile, par les émulateurs (51,52) de l'entité de gestion de la sécurité respectifs de chaque structure mobile, de la requête d'authentification provenant de l'entité de liaison de l'autre structure mobile, pour l'authentification de ladite entité de liaison de l'autre structure mobile sur le serveur de souscription d'abonnés de la structure mobile.

## Patentansprüche

1. Kommunikationssystem mit mindestens zwei mobilen Strukturen (113, 114), die jeweils aufweisen:
- mindestens eine Basisstation (11, 12), die geeignet ist, zellulare Kommunikationsverbindungen mit mobilen Kommunikationsendgeräten (10) der mobilen Struktur über eine bestimmte Funkschnittstelle aufzubauen,
- einen Teilnehmer-Abonnementserver (41, 42), der geeignet ist, Sicherheitsinformationen für die Authentifizierung der mobilen Kommunikationsendgeräte der mobilen Struktur zu verwalten;
- eine Sicherheitsverwaltungseinheit (31, 32), die geeignet ist, mit dem Teilnehmer-Abonnementserver in Dialog zu treten, um Sicherheitsinformationen zu erhalten und zu speichern, die den von der Basisstation bedienten mobilen Kommunikationsendgeräten zugeordnet sind;
- mindestens eine Verbindungsinstanz (21, 22), die geeignet ist, eine Direktmodusverbindung (100) mit der Verbindungsinstanz (22, 21) der anderen mobilen Struktur (114, 113) aufzubauen, wobei die Verbindungsinstanz ein Identifikationsmodul (211, 221) hat, das geeignet ist, eine eindeutige Kennung (IMSI#1, IMSI#2) speichern, die der Verbindungsinstanz zugeordnet ist; und
- einen Emulator (51, 52) der Sicherheitsverwaltungseinheit der mobilen Struktur, auf den durch die Verbindungsinstanz zugegriffen werden kann und der geeignet ist, die Zugangsschnittstelle zum Teilnehmer-Abonnementserver (41, 42) der mobilen Struktur zu emulieren; und
- ein Proxy-Modul (213, 223), das geeignet ist, eine Authentifizierungsanfrage von der Verbindungsinstanz (21, 22) der anderen mobilen Struktur (114, 113) zum Emulator (51, 52) der Sicherheitsverwaltungseinheit (31, 32) der Mobilstation (113, 114) zur Authentifizierung der Verbindungsinstanz (21, 22) der anderen mobilen Struktur (114, 113) auf dem Teilnehmer-Abonnementserver (41, 42) der mobilen Struktur (113, 114) auf der Grundlage der eindeutigen Kennung (IMSI#2, IMSI#1) der Verbindungsinstanz (21, 22) der anderen mobilen Struktur (114, 113) zu transportieren.

2. System nach Anspruch 1, wobei die bestimmte Funkschnittstelle zu den Funkschnittstellen gehört, die geeignet sind, die Zuweisung von Funkressourcen zu einer Direktmodusverbindung zu erlauben und ihre Verwendung in einem Mobilkommunikationsnetz wie einem LTE-, 5G-, Wimax-, 3G-, WLAN- oder Bluetooth-Netz zu erlauben.

3. System nach Anspruch 1 oder Anspruch 2, wobei das Proxy-Modul (213, 223) einer mobilen Struktur (113, 114) in der Verbindungsinstanz (21, 22) der mobilen Struktur implementiert ist.

4. System nach einem der Ansprüche 1 bis 3, wobei die Verbindungsinstanz (21, 22) einer mobilen Struktur (113, 114) ferner ein lokales Zugriffsmodul (212, 222) umfasst, das geeignet ist, den Zugriff auf das Identifikationsmodul der Verbindungsinstanz (211,221) zu sichern, um die eindeutige Kennung (IMSI#1, IMSI#2) zu lesen, die der Verbindungsinstanz zugeordnet ist.

5. System nach einem der Ansprüche 1 bis 4, wobei der Emulator der Sicherheitsverwaltungseinheit (51, 52) jeder mobilen Struktur (113, 114) geeignet ist, eine Zugangsschnittstelle zum Teilnehmer-Abonnementserver (41, 42) der Mobilfunkstruktur, die auf der S6a-Schnittstelle der LTE-Standards des 3GPP-Konsortiums basiert, zu unterstützen.

6. System nach Anspruch 5, wobei eine Zugangsschnittstelle zum Emulator (52) der Sicherheitsverwaltungseinheit (32) der mobilen Struktur (114), die von dem Proxy-Modul (223) der Verbindungsinstanz (22) der mobilen Struktur unterstützt wird, auf dem EMM-Protokoll der LTE-Standards des 3GPP-Konsortiums basiert.

7. System nach einem der Ansprüche 1 bis 6, wobei der Emulator (51, 52) der Sicherheitsverwaltungseinheit (31, 32) jeder mobilen Struktur (113, 114) und das Proxy-Modul (213, 223) der Verbindungsinstanz (21, 22) der mobilen Struktur geeignet sind, der Verbindungsinstanz (21) der anderen mobilen Struktur (113) zu erlauben, eine Authentifizierungsanfrage auf dem Teilnehmer-Abonnementserver (42) der mobilen Struktur (114) im Rahmen der Einrichtung einer direkten Verbindung zwischen der Verbindungsinstanz (22) der mobilen Struktur (114) und der Verbindungsinstanz (21) der anderen mobilen Struktur (113) durchzuführen.

8. System nach einem der Ansprüche 1 bis 7, wobei der Emulator der Sicherheitsverwaltungseinheit (51, 52) einer mobilen Struktur (113, 114) geeignet ist, der Verbindungsinstanz (21, 22) der mobilen Struktur (113, 114) zu erlauben, eine Authentifizierungsanfrage (65, 66) auf dem Teilnehmer-Abonnementserver (41, 42) der mobilen Struktur (113, 114) durchzuführen, ohne über die Funkschnittstelle der Basisstation der mobilen Struktur zu gehen.

9. System nach einem der Ansprüche 1 bis 8, wobei die Verbindungsinstanz (21, 22) einer mobilen Struktur (113, 114) ferner ausgelegt ist, um eine zellulare Kommunikationsverbindung mit der Basisstation (12, 11) der anderen mobilen Struktur (114, 113) über die Funkschnittstelle der Basisstation (12, 11) der anderen mobilen Struktur aufzubauen.

10. System nach Anspruch 8, wobei die Sicherheitsverwaltungseinheit (31, 32) einer mobilen Struktur (113, 114) geeignet ist, der Verbindungsinstanz (22, 21) der anderen mobilen Struktur (114, 113) zu erlauben, eine Authentifizierungsanfrage auf dem Teilnehmer-Abonnementserver (41, 42) der mobilen Struktur durchzuführen.

11. System nach einem der Ansprüche 1 bis 10, wobei die Verbindungsinstanz (22) einer mobilen Struktur (114) geeignet ist, die Verschlüsselung und den Schutz der Unversehrtheit der von der Verbindungsinstanz (21) der anderen mobilen Struktur (113) über die Direktmodusverbindung (100) empfangenen Daten auf der Grundlage eines Sicherheitsschlüssels (K#1) zu unterstützen, der ferner im Identifizierungsmodul (212) der Verbindungsinstanz (21) der anderen mobilen Struktur (113) gespeichert ist.

12. System nach Anspruch 11, wobei die Unversehrtheit und die Verschlüsselung der Daten die Unversehrtheit und die Verschlüsselung der übertragenen Daten in der C-plane-Ebene und die Verschlüsselung in der U-plane-Ebene der LTE-Standards des 3GPP-Konsortiums umfasst.

13. System nach einem der Ansprüche 1 bis 12, wobei die Verbindungsinstanzen der mobilen Strukturen zwischen sich ein Backhaul-Netzwerk bilden.

14. System nach einem der Ansprüche 1 bis 13, wobei die Verbindungsinstanz einer mobilen Struktur ausgelegt ist, um eine Direktmodusverbindung mit der jeweiligen Verbindungsinstanz von mindestens zwei anderen mobilen Strukturen gemäß einem Point-to-Multipoint-Protokoll aufzubauen.

15. Verfahren zur gegenseitigen Authentifizierung von Verbindungsinstanzen (21, 22) jeweiliger mobilen Strukturen (113, 114) eines Kommunikationssystems nach einem der Ansprüche 1 bis 14 zur Herstellung einer Direktmodusverbindung (100) zwischen den Verbindungsinstanzen (21, 21),
wobei das Verfahren die Schritte umfasst:
- Übertragen einer Anfrage zur Authentifizierung auf dem Teilnehmer-Abonnementserver der mobilen Struktur, die von der Verbindungsinstanz (22, 21) der anderen mobilen Struktur (114, 113) kommt, an die Verbindungsinstanz (21, 22) jeder mobilen Struktur (113, 114);
- Transportieren der von der Verbindungsinstanz der anderen mobilen Struktur empfangenen Authentifizierungsanfrage über die jeweiligen Proxy-Module (213, 223) jeder mobilen Struktur (114, 113) zum Emulator (51, 52) der Sicherheitsverwaltungseinheit jeder anderen mobilen Struktur (114, 113); und
- Präsentieren der Authentifizierungsanfrage, die von der Verbindungsinstanz der anderen mobilen Struktur kommt, durch die jeweiligen Emulatoren (51, 52) der Sicherheitsverwaltungseinheit jeder mobilen Struktur auf den jeweiligen Teilnehmer-Abonnementservern (41, 42) jeder mobilen Struktur zwecks Authentifizierung der Verbindungsinstanz der anderen mobilen Struktur auf dem Teilnehmer-Abonnementserver der mobilen Struktur.

## Claims

1. A communication system comprising at least two mobile structures (113,114), each mobile structure comprising:
- a base station (11,12) adapted to establish cellular communication links with mobile communication terminals (10) of a respective mobile structure via a determined radio interface,
- a subscriber subscription server (41,42) adapted to manage security information for authenticationof the mobile communication terminals of the respective mobile structure;
- a security management entity (31,32) adapted to interact with the subscriber subscription server in order to obtain and store security information associated with the mobile communication terminals served by the base station;
- at least one link entity (21,22) adapted to establish a direct mode link (100) with another link entity (22,21) of the other mobile structure (114,113), said link entity having an identification module (211,221) adapted to store a unique identifier (IMSI#1,IMSI#2) associated with the link entity;
- an emulator (51,52) of the security management entity of the mobile structure, accessible by the link entity and adapted to emulate the interface for accessing the subscriber subscription server (41,42) of said mobile structure; and,
- a proxy module (213,223) adapted to transport an authentication request from the link entity (21,22) of the other mobile structure to the emulator (51,52) of the security management entity (31,32) of the mobile structure (113,114), for the authentication of said link entity (21,22) of the other mobile structure (114,113) on the subscriber subscription server (41,42) of the mobile structure (113,114), based on the unique identifier (IMSI#1,IMSI#2) of said link entity (21,22) of the other mobile structure (114,113).

2. The system according to claim 1, wherein the determined radio interface is included among radio interfaces adapted to allow allocation of radio resources to a direct mode link and to allow its use in a mobile communication network such as an LTE, 5G, Wimax, 3G, Wifi, or Bluetooth network.

3. The system according to claim 1 or 2, wherein the proxy module (213,223) of a mobile structure (113,114) is implemented in the link entity (21,22) of said mobile structure.

4. The system according to any one of the claims 1 to 3, wherein the link entity (21,22) of the mobile structure (113,114) further comprises a local access module (212,222) adapted to ensure access to the identification module of the link entity (211,221) in order to read the unique identifier (IMSI#1,IMSI#2) associated with the link entity.

5. The system according to any one of the claims 1 to 4, wherein the emulator of the security management entity (51,52) of said each mobile structure (113,114) is adapted to support an interface for accessing the subscriber subscription server (41,42) of the said mobile structure based on an S6a interface of LTE standards of 3GPP consortium.

6. The system according to any one of the claims 1 to 5, wherein an interface for accessing the emulator (52) of the security management entity (32) of the mobile structure (113,114) which is supported by the proxy module (223) of the link entity (22) of the mobile structure is based on the EMM protocol of the LTE standards of the 3GPP consortium.

7. The system according to any one of the claims 1 to 6, wherein the emulator (51,52) of the security management entity (31,32) of each mobile structure (113,114) and the proxy module (213,223) of the link entity (21,22) of said mobile structure are adapted to allow the link entity (21) of the other mobile structure (113) to perform an authentication request on the subscriber subscription server (42) of said mobile structure (114), as part of establishing a direct link between the link entity (22) of the mobile structure (114) and said link entity (21) of the other mobile structure (113).

8. The system according to any one of the claims 1 to 7, wherein the emulator of the security management entity (51,52) of a mobile structure (113,114) is adapted to allow the link entity (21,22) of said mobile structure (113,114) to perform an authentication request (65,66) on the subscriber subscription server (41,42) of said mobile structure (113,114) without passing through the radio interface of the base station of the mobile structure.

9. The system according to any one of the claims 1 to 8, wherein the link entity (21,22) of the mobile structure (113,114) is further configured to establish a cellular communication link with the base station (12,11) of the other mobile structure (114,113) via the radio interface of said base station (12,11) of the other mobile structure.

10. The system according to claim 8, wherein the security management entity (31,32) of the mobile structure (113,114) is adapted to allow the link entity (22,21) of the other mobile structure (114,113) to perform the authentication request on the subscriber subscription server (41,42) of said mobile structure.

11. The system according to any one of the claims 1 to 10, wherein the link entity (22) of a mobile structure (114) is adapted to support encryption and integrity protection of data received from the link entity (21) of the other mobile structure (113) via the direct mode link (100), based on a security key (K#1) further stored in the identification module (212) of the link entity (21) of said other mobile structure (113).

12. The system according to claim 11, wherein data integrity and encryption comprise integrity and encryption of the data transmitted in a C-plane plane and theencryption in a U-plane plane of LTE standards of the 3GPP consortium.

13. The system according to any one of the claims 1 to 12, wherein the link entities of the mobile structures form a backhaul network between them.

14. The communication system according to any one of the claims 1 to 13, in which the link entity of a mobile structure is configured to establish a direct mode link with respective link entities of at least two other mobile structures according to a point-to-multipoint protocol.

15. A method of mutual authentication of link entities (21,22) of mobile structures (113,114) of a communication system according to any one of the claims 1 to, for establishing a direct mode link (100) between said link entities (21,22),
said method comprising the following steps:
- transmitting to the link entity (21,22) of said each mobile structure (113,114) an authentication request on the subscriber subscription server of said mobile structure from the link entity (22,21) of the other mobile structure (114,113);
- transporting, through the respective proxy modules (213,223) of said mobile structure (114,113), the authentication request received from the link entity of the other mobile structure, to the emulator (51,52) of the security management entity of each other mobile structure (114,113); and
- presenting, to the respective subscriber subscription servers (41,42) of each mobile structure, by the respective security management entity emulators (51,52) of each mobile structure, the authentication request from the link entity of the other mobile structure, for the authentication of said link entity of the other mobile structure on the subscriber subscription server of the mobile structure.
